Europäisches Patentamt

European Patent Office

Office européen des brevets

(11) Veröffentlichungsnummer : **0 071 937**
**B1**

(12) **EUROPÄISCHE PATENTSCHRIFT**

(45) Veröffentlichungstag der Patentschrift :
30.07.86

(51) Int. Cl.⁴ : **H 02 P 3/24**

(21) Anmeldenummer : **82106965.5**

(22) Anmeldetag : **02.08.82**

(54) Schalteinrichtung für Gleichstrombremsung eines Einphasen-Wechselstrommotors oder eines Drehstrommotors.

(30) Priorität : **12.08.81 DE 3131846**

(43) Veröffentlichungstag der Anmeldung :
**16.02.83 Patentblatt 83/07**

(45) Bekanntmachung des Hinweises auf die Patenterteilung : **30.07.86 Patentblatt 86/31**

(84) Benannte Vertragsstaaten :
**AT BE CH FR GB LI LU NL SE**

(56) Entgegenhaltungen :
**DE-A- 2 017 492**
**DE-A- 2 200 811**
**US-A- 3 786 327**
**Patent Abstracts of Japan, Band 1, Nr. 112, 28. September 1977, Seite 4804E77**
**Patent Abstracts of Japan, Band 1, Nr. 112, 28. September 1977, Seite 4148E77**

(73) Patentinhaber : **Licentia Patent-Verwaltungs-GmbH Theodor-Stern-Kai 1**
**D-6000 Frankfurt/Main 70 (DE)**

(72) Erfinder : **Scholz, Horst, Ing. grad.**
**Silbkestrasse 72**
**D-4788 Warstein 2 (DE)**
Erfinder : **Vollmar, Wilfried, Ing. grad.**
**An der Schlenke 14**
**D-4770 Soest-Deiringsen (DE)**

(74) Vertreter : **Lertes, Kurt, Dr. et al**
**Licentia Patent-Verwaltungs-GmbH Theodor-Stern-Kai 1**
**D-6000 Frankfurt/M 70 (DE)**

## Beschreibung

Die Erfindung betrifft eine Schalteinrichtung für Gleichstrombremsung eines Wechselstrommotors mit mindestens zwei Phasenwicklungen, welchen der Antriebsstrom aus einem Wechselstromnetz über Phasenleiter mit Ein-Schaltglied eines Betriebsschalters und einen Phasenleiter ohne Ein-Schaltglied zugeführt wird, mit einem dem Motor zugeordneten, einphasigen Bremsstromkreis, der das Wechselstromnetz und den Motor miteinander verbindet und einen ersten und einen zweiten Bremsstromkreis enthält, von denen der erste Bremsstromkreis über einen Thyristor und einen Ruhekontakt und der zweite Teilstromkreis von dem Phasenleiter ohne Ein-Schaltglied über eine Freilaufdiode und den Ruhekontakt zu einer Anschlußklemme der Phasenwicklung des Motors führen, wobei der Ruhekontakt mit dem Betriebsschalter mechanisch verbunden ist und nach Öffnen des Betriebsschalters geschlossen wird.

Eine derartige Schalteinrichtung ist aus der DE-A-20 17 452 bekannt. Der Motor kann auch während des Bremsens auf Antreiben umgeschaltet werden, wobei zuerst Ruhekontakte geöffnet und nach einer Schaltpause Ein-Schaltglieder geschlossen werden. Entstehen beim Öffnen der Ruhekontakte Schaltlichtbögen und ist die Schaltpause zu kurz, so kann es nach dem Schließen der Ein-Schaltglieder zu einem Kurzschluß der Netzphasen über den Bremsstromkreis kommen, da dann die Lichtbögen noch bestehen. Eine Funkenlöscheinrichtung, die in der Druckschrift nicht ausdrücklich erwähnt wird, ist unentbehrlich, wenn die Schaltpause beim Umschalten vom Bremsen auf Antreiben zu kurz ist.

Der Erfindung liegt die Aufgabe zugrunde, den Bremsstromkreis so auszubilden, daß Lichtbögen auch ohne zusätzliche Funkenlöscheinrichtung vermieden werden, und zwar nicht nur für den Bremsstromkreis bei einem Einphasen-Wechselstrommotor mit Hilfsphase, sondern auch bei einphasig betriebenen Drehstrommotoren in Steinmetz-Schaltung, deren Wicklungen verschieden geschaltet und beschaltet sind, und bei Drehstrommotoren in Sternschaltung.

Diese Aufgabe wird gemäß der Erfindung dadurch gelöst, daß die beiden Bremsstromkreise zu derselben Anschlußklemme führen und daß diese Anschlußklemme der Phasenwicklung nicht direkt mit einem Phasenleiter verbunden ist.

Die Funkenlöscheinrichtung wird dadurch entbehrlich, daß ein eventuell über die Ruhekontakte und die Diode fließender Netzkurzschlußtrom (Fig. 1 bis 4) durch den Kondensator unmittelbar blockiert wird bzw. bei einem Drehstrommotor gemäß Fig. 5 und 6 über eine zugeordnete Phasenwicklung fließt.

Weiterbildungen der Erfindung sind den Unteransprüchen zu entnehmen. Diese betreffen drei Varianten des Bremsstromkreises, nämlich für einen Einphasen-Wechselstrommotor mit Hilfsphase, einen einphasig betriebenen Drehstrommotor in Steinmetz-Schaltung und einen Drehstrommotor in Sternschaltung.

Ausführungsformen der Erfindung werden nach stehend anhand der Figuren beschrieben. Es zeigen:

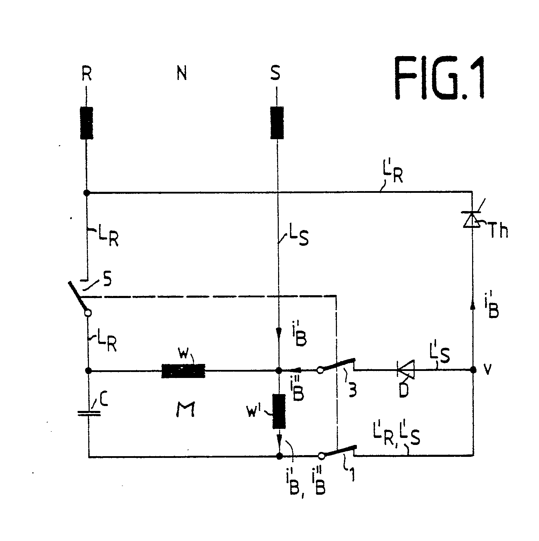

Figur 1 eine Schalteinrichtung für Gleichstrombremsung eines mit Hilfsphase beschalteten Einphasen-Wechselstrommotors;

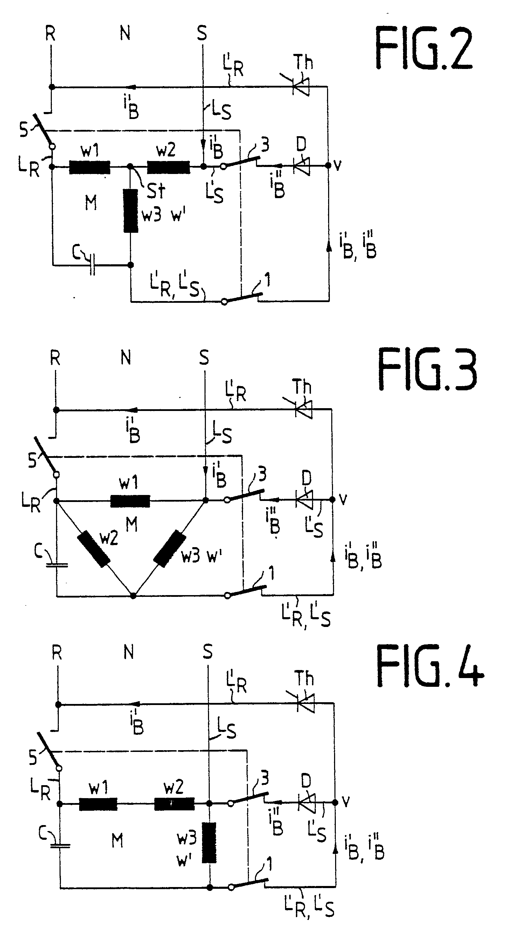

Figur 2 eine Schalteinrichtung für Gleichstrombremsung eines einphasig betriebenen Drehstrommotors in Steinmetz-Schaltung;

Figuren 3 und 4 zwei weitere Varianten einer Schalteinrichtung nach Fig. 2 mit einem Drehstrommotor in Steinmetz-Schaltung und

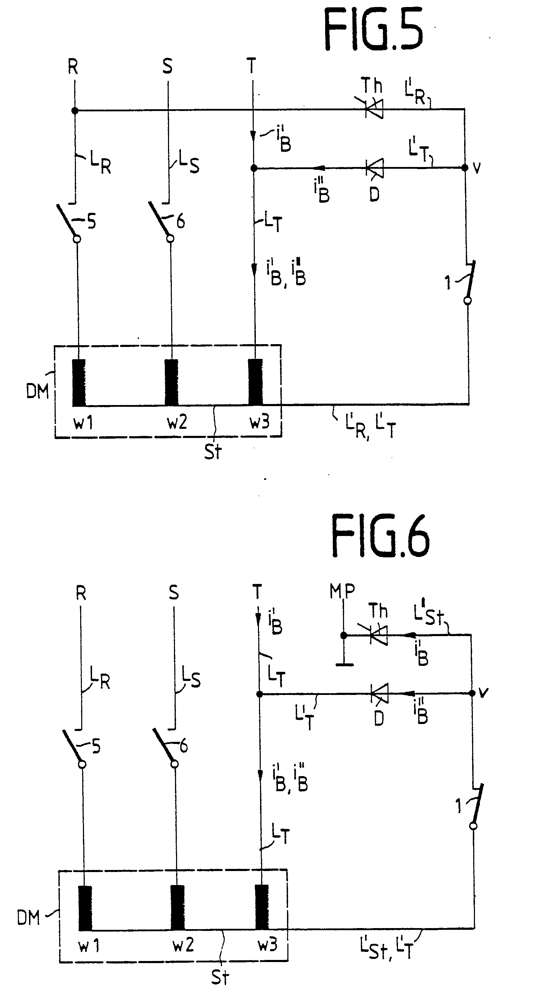

Figuren 5 und 6 zwei Schalteinrichtungen für Gleichstrombremsung eines Drehstrommotors, jeweils in Sternschaltung.

In den Figuren sind gleiche Elemente mit den gleichen Bezugszeichen versehen.

In Fig. 1 ist der erste Leiter $L'$ der den Bremsthyristor $T_h$ enthält und den ersten Teilstromkreis des Bremsstromkreises bildet, an die Verbindung der Reaktanz C und der Hilfswicklung $w'$ der Motorhilfsphase geführt, so daß der Bremsstromkreis den Phasenleiter $L_R$ mit dem Schaltglied 5 über die Reaktanz C der Hilfsphase umgeht. Wenn der Thyristor $T_h$ stromleitend ist, fließt der Bremsstrom $i'_B$ von der Netzphase S über $L_S$, die Hilfswicklung $w'$ der Motorhilfsphase und den Leiter $L'_R$ mit dem Thyristor Th zu der Netzphase R. Wenn der Thyristor Th durch die negative Netzspannung gesperrt ist, klingt der Bremsstrom als Freilaufstrom $i''_B$ ab. Dieser fließt im Leiter $L'$, der den zweiten Teilstromkreis bildet, von $w'_S$ durch ein mit $L'_R$ gemeinsames Teilstück über den Ruhekontakt 1, dann über die Diode D und den Ruhekontakt 3 nach $n'$. Damit kann man einen beim Übergang von Bremsen auf Antreiben des Motors über die Ruhekontakte und die Diode D fließenden Kurzschlußstrom zulassen, da dieser durch den Kondensator C unmittelbar blockiert wird. Zudem ergibt sich der Vorteil, daß der Bremsstromkreis einfacher wird, denn es kann ein Ruhekontakt und auch ein Ein-Schaltglied wegfallen, da der schaltgliedfreie Phasenleiter $L_S$ für den Antriebsstrom und den Bremsstrom benutzt werden kann. Von den Kontakten 1 und 3 ist nur der Kontakt 1 erforderlich, der Kontakt 3 bewirkt eine zusätzliche Trennung vom Netz N.

Nach Fig. 2 wird ein Drehstrommotor M, dessen Arbeitswicklungen w1, w2, w3 eine Sternschaltung bilden, über zwei Phasenleiter $L_R$, $L_S$ mit einem Ein-Schaltglied 5 in $L_R$ an einem Einphasen-Wechselstromnetz N mit den Netzphasen R und S begetrieben. Der Bremsstromkreis besteht aus zwei leitern $L'_R$, $L'_S$, die zwei Teilstromkreise mit einem Bremsthyristor Th und einer Diode D bilden, welche Stromkreise zum Teil, wie in Fig. 1, einen gemeinsamen Leiter $L'_R$, $L'_S$ haben und in denen je ein Ruhekontakt 1 bzw. 3 liegt. Der erste Teilstromkreis $L'_R$ des Bremsstromkreises umgeht mit dem Ruhekontakt 1 und dem Bremsthyristor den Phasenleiter $L_R$, in dem das Schaltglied 5 liegt, über eine Reaktanz C (einen Kondensator) der Hilfsphase des Drehstrommotors. Der zweite Teilstromkreis $L'_S$ enthält eine Diode D sowie den Ruhekontakt 3 in Reihenschaltung und bildet einen Freilaufstromkreis bezüglich der zwei Motorwicklungen w2, w3. Der erwähnte Kondensator C überbrückt die Reihenschaltung der Wicklungen w1 und w3 und ist (wie w1) mit dem Schaltglied 5 direkt verbunden. Zusammen mit der Wicklung w3 bildet der Kondensator die Hilfsphase des Drehstrommotors. Der Bremsstrom $i'_B$ aus dem Netz N fließt von S über $L_S$, w2, w3, 1, Th nach R. Während die Netzspannung negativ ist, fließt der Freilaufstrom $i''_B$ aus w2 und w3 in $L'_S$ über 1, D und 3 nach w2. Beim Umschalten des Motors von Bremsen auf Antrieb fließt der mögliche Kurzschlußstrom als Stromfluß wie in Fig. 1 von R ebenfalls über den Kondensator und den Freilaufstromkreis nach S. Der Ruhekontakt 1 in dem gemeinsamen Teil der Leiter $L'_R$, $L'_S$ macht den Ruhekontakt 3 entbehrlich.

In der Schaltung nach Fig. 3 ist ein Drehstrommotor M mit Hilfsphase (Steinmetzschaltung) über zwei Phasenleiter $L_R$, $L_S$ an ein Einphasen-Wechselstromnetz N anschließbar. Die drei Arbeitswicklungen w1, w2, w3 des Motors bilden hier eine Dreieckschaltung, in der einer Wicklung w2, die mit dem Phasenleiter $L_R$ direkt verbunden ist, der das Ein-Schaltglied 5 enthält, der Kondensator C der Hilfsphase parallelgeschaltet ist. Der Schalter 5 wird über den Bremsthyristor Th, den Ruhekontakt und die Motorwicklungen umgangen. Dabei fließt der Bremsstrom $i'_B$ aus dem Netz N von S über $L_S$, w3, 1 und Th nach R. Der zweite Leiter $L'_S$, der zum Teil mit dem ersten Leiter $L'_R$ gemeinsam ist, bildet den Freilaufstromkreis mit der Diode D und dem Ruhekontakt 3. Hierin fließt der freilaufende Strom $i''_B$ von w3 in $L'_S$ über 1, D, 3 nach w3. Ein beim Umschalten von Bremsen zum Antrieb des Motors, wenn beim Schließen des Schaltgliedes 5 ein Schaltlichtbogen über dem zuvor geöffneten Ruhekontakt 1 des Bremsstromkreises besteht, entstehender Kurzschlußstrom fließt als kurzer unschädlicher Stromstoß aus dem Netz von R über C und die Diode D, die im Leiter $L'_S$ liegt, nach S. Es genügt ein Ein-Schaltglied 5 im Phasenleiter $L_R$ des Antriebsstromkreises und ein Ruhekontakt 1 in $L'_R$, $L'_S$.

Nach Fig. 4 ist ein Drehstrommotor mit Hilfsphase ebenfalls über die zwei Phasenleiter $L_R$, $L_S$ mit einem Ein-Schaltglied 5 in $L_R$ an ein Einphasennetz N anschließbar. Die drei Motorwicklungen w1, w2, w3 bilden eine Reihenschaltung, welcher der Kondensator C der Hilfsphase parallelliegt.

Über den Kondensator C wird der Phasenleiter $L_R$ mit dem Schaltglied 5 durch den Bremsstromkreis mit dem Leiter $L'_R$, dem Kontakt 1 und dem Bremsthyristor Th umgangen. Der Bremsstrom $i'_B$ fließt aus N von S über $L_S$, w3, 1, Th nach R.

Leiter $L'_S$, der zum Teil mit dem Phasenleiter $L'_R$ gemeinsam ist, bildet mit der Diode D und dem Ruhekontakt 3 den Freilaufkreis, in dem $i''_B$ wiederum von w3 über 1, D und 3 nach w3 fließt. Beim Umschalten des Motors M von Bremsen auf Antrieb fließt der nach dem Schließen von 5 mögliche Kurzschlußstrom als Stromstoß aus dem Netz N von R über C, 1 und den Teil des Freilaufstromkreises mit D, 3 und $L_S$ nach S. Es genügt wiederum ein Ein-Schaltglied 5 im Phasenleiter $L_R$. Der Ruhekontakt 3 ist entbehrlich.

Fig. 5 zeigt einen unbeschalteten Drehstrommotor DM in Sternschaltung, der über drei Phasenleiter $L_R$, $L_S$, $L_T$ mit Ein-Schaltgliedern 5, 6 an ein Drehstromnetz RST anschließbar ist. Der Bremsstromkreis besteht hier aus dem Leiter $L'_R$, in dem der Ruhekontakt 1 und der Bremsthyristor Th in Reihe liegen, und dem Leiter $L'_T$ mit demselben Ruhekontakt 1 und der Diode D in Reihenschaltung. $L'_T$ bildet einen Freilaufstromkreis für eine Phasenwicklung (hier w3) des Motors DM. $L'_R$ verbindet den Sternpunkt mit dem Phasenleiter $L_R$, $L'_T$ den Sternpunkt mit einer Phase (hier T) des Drehstromnetzes. Zwischen St und der Verzweigung v des Bremsstromkreises sind die Leiter $L'_R$ und $L'_T$ gemeinsam.

Mit dem Leiter $L'_R$ umgeht der Bremsstromkreis den Phasenleiter $L_R$ oder $L_S$ mit dem Ein-Schaltglied 5 bzw. 6 über die zugeordneten Phasenwicklungen w1, w2, des Motors und den Sternpunkt St des Motors. Bremsstrom $i'_B$ fließt aus einer Netzphase T über die zugeordnete Phasenwicklung w3, $L'_R$, 1 und Th nach R. Beim Umschalten von Bremsen auf Antrieb des Motors fließt der nach dem Schließen der Ein-Schaltglieder 5, 6 mögliche « Kurzschlußstrom » aus dem Netz von R oder S jeweils über die zugeordnete Phasenwicklung des Motors, dann über den im Nebenschluß zur Phasenwicklung w3 angeordneten Freilaufstromkreis nach T. Dieser Strom fließt bis zum Erlöschen des Schaltlichtbogens über den Ruhekontakt 1. Der freilaufende Strom $i''_B$ fließt in $L'_T$ von w3 über den Ruhekontakt 1, Diode D nach w3.

Im Bremsstromkreis genügt der im gemeinsamen Teil der Leiter $L'_R$ und $L'_T$ liegende Ruhekontakt 1, der vor der Verzweigung v liegt. Der Phasenleiter T, über den der Bremsstrom fließt, ist schaltgliedfrei.

Die Schaltung nach Fig. 6, in der ein unbeschalteter Drehstrommotor DM in Sternschaltung über drei Phasenleiter $L_R$, $L_S$, $L_T$ an ein Drehstromnetz RST anschließbar ist, von denen $L_T$ schaltgliedfrei ist, gleicht der Schaltung nach Fig. 6 bis auf den Unterschied, daß der Sternpunkt St des Motors DM durch den Leiter $L'_{St}$ (erster Teilstromkreis des Bremsstromkreises) mit dem Mittelpunktleiter MP des Netzes verbunden ist. Den zweiten Teilstromkreis (Freilaufkreis) bildet wie in Fig. 6 der Leiter $L'_T$, der zwischen St und der Verzweigung v des Bremsstromkreises mit dem Leiter $L'_{St}$ gemeinsam ist und den gemeinsamen Ruhekontakt 1 enthält.

Mit dem Leiter $L'_{St}$ umgeht der Bremsstromkreis den Phasenleiter $L_R$ oder $L_S$ des Schaltglie-

des 5 bzw. 6 und die zugeordnete Netzphase über die Phasenwicklung w1 bzw. w2 des Motors und den Mittelpunktleiter MP des Netzes. Bremsstrom fließt von T über w3, $L'_{St}$, 1, Th nach MP. Ein beim Umschalten von Bremsen auf Antrieb des Motors möglicher Kurzschlußstrom fließt von R oder S über w1 bzw. w2, $L'_T$, 1, D nach T. Auch hier genügt im Bremsstromkreis ein Ruhekontakt 1, und der Phasenleiter $L_T$ ist schaltgliedfrei.

## Patentansprüche

1. Schalteinrichtung für Gleichstrombremsung eines Wechselstrommotors (M, DM) mit mindestens zwei Phasenwicklungen (w, w'; w1, w2, w3), welchen der Antriebsstrom aus einem Wechselstromnetz über Phasenleiter (R; R, S) mit Ein-Schaltglied (5; 5, 6) eines Betriebsschalters und einen Phasenleiter (S; T) ohne Ein-Schaltglied zugeführt wird, mit einem dem Motor zugeordneten, einphasigen Bremsstromkreis, der das Wechselstromnetz (N) und den Motor, miteinander verbindet und einen ersten ($L'_R$; $L'_{St}$) und einen zweiten ($L'_S$; $L_T'$) Bremsteilstromkreis enthält, von denen der erste Teil stromkreis über einen Thyristor (Th) und einen Ruhekontakt (1) und der zweite Teilstromkreis von dem Phasenleiter ohne Ein-Schaltglied über eine Freilaufdiode (D) und den Ruhekontakt zu einer Anschlußklemme der Phasenwicklung des Motors führen, wobei der Ruhekontakt mit dem Betriebsschalter mechanisch verbunden ist und nach Öffnen des Betriebsschalters geschlossen wird, dadurch gekennzeichnet, daß die beiden Bremsstromkreise zu derselben Anschlußklemme führen und daß diese Anschlußklemme der Phasenwicklung nicht direkt mit einem Phasenleiter ($L_R$, $L_S$) verbunden ist.

2. Schalteinrichtung nach Anspruch 1 zur Verwendung eines Einphasen-Wechselstrommotors mit Hilfsphase, bestehend aus einer Hilfswicklung (w') in Reihe mit einem Kondensator (C), in Parallelschaltung mit der Hauptwicklung (w) des Motors, dadurch gekennzeichnet, daß die Teilstromkreise ($L'_R$, $L'_S$) des Bremsstromkreises zu der Verbindung der Hilfswicklung (W') und des Kondensators (C) der Hilfsphase des Motors (M) führen, wobei der Netzkurzschlußstrom unmittelbar durch den Kondensator blockiert wird.

3. Schalteinrichtung nach Anspruch 1 zur Verwendung eines Drehstrommotors in Steinmetzschaltung, dadurch gekennzeichnet, daß der erste Teilstromkreis ($L'_R$) und der zweite Teilstromkreis ($L'_S$) zu der Verbindung der als Hilfswicklung (W') dienenden Phasenwicklung des Drehstrommotors (M) und des Kondensators (C) der Steinmetzschaltung führen, wobei der Netzkurzschlußstrom unmittelbar durch den Kondensator blockiert wird.

4. Schalteinrichtung nach Anspruch 1 zur Verwendung eines Drehstrommotors in Sternschaltung, dadurch gekennzeichnet, daß der erste Teilstromkreis ($L'_R$) und der zweite Teilstromkreis ($L'_T$) zum Sternpunkt (St) des Drehstrommotors (DM) führen.

## Claims

1. Switching equipment for direct current braking of an alternating current motor (M, DM) with at least two phase windings (w, w'; w1, w2, w3), to which the driving current is conducted from an alternating current mains by way of phase conductors (R; R, S) with switch-on member (5; 5, 6) of an operating switch and a phase conductor (S; T) without switch-on member, with a single-phase braking current circuit, which is associated with the motor, connects the alternating current mains (N) and the motor each with the other and contains a first ($L'_R$; $L'_{St}$) and a second ($L'_S$; $L'_T$) partial braking current circuit, of which the first partial current circuit leads by way of a thyristor (Th) and a rest contact (1) and the second partial current circuit leads from the phase conductor without switch-on member by way of a freewheel diode (D) and the rest contact to a connection terminal of the phase winding of the motor, wherein the rest contact is connected mechanically with the operating switch and closed after opening of the operating switch, characterised thereby, that both the braking current circuits lead to the same connection terminal and that this connection terminal is not connected directly with a phase conductor ($L_R$, $L_S$).

2. Switching equipment according to claim 1 for use of a single-phase alternating current motor with auxiliary phase consisting of an auxiliary winding (w') in series with a capacitor (C) in parallel connection with the main winding (w) of the motor, characterised thereby, that the partial current circuits ($L'_R$, $L'_S$) of the braking current circuit lead to the junction of the auxiliary winding (w') and the capacitor (C) of the auxiliary phase of the motor (M), wherein the mains short-circuit current is blocked directly by the capacitor.

3. Switching equipment according to claim 1 for use of a polyphase alternating current motor in delta connection, characterised thereby, that the first partial current circuit ($L'_R$) and the second partial current circuit ($L'_S$) lead to the junction of the phase winding, serving as auxiliary winding (W') of the polyphase alternating current motor (M) and of the capacitor (C) of the delta connection, wherein the mains short-circuit current is blocked directly by the capacitor.

4. Switching equipment according to claim 1 for use of a polyphase alternating current motor in star connection, characterised thereby, that the first partial current circuit ($L'_R$) and the second partial current circuit ($L'_T$) lead to the star point (St) of the polyphase alternating current motor (DM).

## Revendications

1. Dispositif de freinage par courant continu d'un moteur à courant alternatif (M, DM) comprenant au moins deux enroulements de phase (w, w ; $w_1$, $w_2$, $w_3$) auxquels un réseau alternatif transmet le courant moteur par un conducteur de phase (R ; R, S) comportant l'organe de fermeture (5 ; 5, 6) d'un commutateur de mode et un conducteur de phase (S ; T) sans organe de fermeture, ainsi qu'un circuit de freinage monophasé, affecté au moteur, reliant le réseau alternatif (N) au moteur et comportant un premier ($L'_R$ ; $L'_{St}$) et un second circuit de freinage partiel ($L'_S$ ; $L'_T$), dont le premier est relié à une borne de l'enroulement de phase du moteur par un thyristor (Th) et un contact de repos (1), et le second relie le conducteur de phase sans organe de fermeture à ladite borne par une diode de bras libre (D) et le contact de repos qui est relié mécaniquement au commutateur de mode et se ferme après l'ouverture de ce dernier, ledit dispositif étant caractérisé en ce que les deux circuits de freinage sont reliés à la même borne de l'enroulement de phase et ladite borne n'est pas reliée directement à un conducteur de phase ($L_R$, $L_S$).

2. Dispositif selon revendication 1, pour utilisation d'un moteur monophasé à phase auxiliaire, constituée par un enroulement auxiliaire (w') en série avec un condensateur (C) et en parallèle avec l'enroulement principal (w) du moteur, ledit dispositif étant caractérisé en ce que les circuits de freinage partiels ($L'_R$, $L'_S$) sont reliés au point de connexion de l'enroulement auxiliaire (x') et du condensateur (C) de la phase auxiliaire du moteur (M), le condensateur bloquant directement le courant de courant-circuit réseau.

3. Dispositif selon revendication 1 pour utilisation d'un moteur triphasé en couplage de Steinmetz, caractérisé en ce que le premier ($L'_R$) et le second circuit partiel ($L'_S$) sont reliés au point de connexion de l'enroulement de phase du moteur triphasé (M) servant d'enroulement auxiliaire (w') et du condensateur (C) du couplage de Steinmetz, le condensateur bloquant directement le courant de court-circuit réseau.

4. Dispositif selon revendication 1 pour utilisation d'un moteur triphasé en couplage étoile, caractérisé en ce que le premier ($L'_R$) et le second circuit partiel ($L'_T$) sont reliés au point neutre (St) du moteur triphasé (DM).

0 071 937

FIG.1

# FIG.2

# FIG.3

# FIG.4

# FIG.5

# FIG.6